Europäisches Patentamt

(19) European Patent Office

Office européen des brevets

(11) Numéro de publication : **0 108 668**
**B1**

(12) **FASCICULE DE BREVET EUROPÉEN**

(45) Date de publication du fascicule du brevet :
**11.02.87**

(21) Numéro de dépôt : **83401975.4**

(22) Date de dépôt : **11.10.83**

(51) Int. Cl.⁴ : **H 04 B   9/00,** H 04 B 17/02

(54) **Système d'exploitation et de maintenance d'équipements répartis le long d'une liaison de transmission numérique.**

(30) Priorité : **12.10.82 FR 8217049**

(43) Date de publication de la demande :
**16.05.84 Bulletin 84/20**

(45) Mention de la délivrance du brevet :
**11.02.87 Bulletin 87/07**

(84) Etats contractants désignés :
**BE DE FR GB NL SE**

(56) Documents cités :
**EP-A- 0 018 295**
**EP-A- 0 042 229**
**EP-A- 0 059 395**
**US-A- 3 787 613**
**NATIONAL TELECOMMUNICATIONS CONFERENCE,**
**vol. 1, novembre 1981, New Orleans, IEEE, cat. no.**
**81CH1679-0, pages A1.4.1-A1.4.5, New York, USA,**
**D.J. PETERSON et al.: "A 90 MHz fiber optic repeater**
**with regeneration and remote control"**

(73) Titulaire : **ALCATEL**
**12, rue de la Baume**
**F-75008 Paris (FR)**

(72) Inventeur : **Calu, Serge**
**Crec'h Lagaduren**
**F-22560 Pleumeur Bodou (FR)**

(74) Mandataire : **Weinmiller, Jürgen et al**
**Lennéstrasse 9**
**D-8133 Feldafing (DE)**

## Description

La présente invention est du domaine des transmissions numériques sur câbles.

L'acheminement de signaux numériques s'opère, en général, sur une liaison bidirectionnelle établie entre deux stations d'extrémité et partagée dès qu'elle dépasse une certaine longueur, en sections délimitées par des stations intermédiaires. La maintenance et l'exploitation d'une telle liaison se font grâce à un système d'intercommunication entre les stations et à une télésurveillance plus ou moins complexe allant de la télécommande de bouclage des deux sens de la liaison au niveau des stations à la collecte d'informations de fonctionnement dans les stations et nécessitant une ou plusieurs voies de service.

Dans les liaisons de transmission numérique par câbles électriques, les voies de service pour communiquer entre les stations sont généralement acheminées par des paires auxiliaires. Dans les liaisons de transmission par fibres optiques où il est souhaitable d'éliminer les paires auxiliaires cuivre notamment pour des raisons de poids, ces voies de services sont ajoutées au signal de trafic numérique non pas par multiplexage à répartition dans le temps mais par superposition à l'aide d'une modulation auxiliaire. En effet, il est souhaitable que ces voies restent indépendantes des circuits de traitement du signal de trafic numérique pour des raisons de fiabilité, de consommation et de souplesse d'exploitation. Dans le signal en ligne elles sont placées dans une bande de fréquence inférieure à celle du trafic numérique. Dans les équipements de la liaison, elles sont traitées de manière indépendante du signal de trafic numérique.

La demande de brevet européen EP-A-0 042 229 décrit par exemple un système de télésurveillance pour une liaison de transmission numérique par fibres optiques à répéteurs intermédiaires dans lequel une modulation auxiliaire de phase ou de fréquence est utilisée pour acheminer le long de la liaison une pluralité de tonalités servant à adresser indépendamment chaque répéteur et à provoquer dans le répéteur considéré un bouclage conditionnel ou non de la liaison.

La demande de brevet européen EP-A-0 018 295 décrit un autre exemple de système de télésurveillance pour des liaisons bidirectionnelles de transmission numérique par câbles électriques avec répéteurs intermédiaires permettant la collecte d'informations de fonctionnement prises pratiquement à un même instant dans tous les répéteurs. Celui-ci emploie une voie de transmission numérique à très basse vitesse empruntant l'un des sens de la liaison pour la collecte des informations de fonctionnement des équipements à une station d'extrémité et une voie de télécommande à très bas débit empruntant l'autre sens de la liaison pour l'interrogation des circuits locaux de surveillance des différents équipements. Les voies de transmission numérique à très basse vitesse et de télécommande à très bas débit qui occupent une faible largeur de spectre de fréquence sont en général transmises par une modulation par tout ou rien de porteuses basses fréquences ajoutées aux signaux de trafic numérique des deux sens de la liaison. La voie de télécommande peut également être transmise par une modulation de parité du signal de trafic comme décrit dans la demande de brevet français n° 2 446 570. Chacune des voies de transmission numérique à très basse vitesse et de télécommande est traitée individuellement dans chaque équipement où elle est séparée du signal de trafic dès réception soit par un filtre d'aiguillage soit par un détecteur de parité, régénérée, éventuellement reconfigurée pour lui adjoindre les informations de fonctionnement propres à l'équipement considéré puis recombinée au signal de trafic numérique juste avant l'émission du signal en ligne.

Ce genre de système de télésurveillance perfectionné, présente cependant l'inconvénient de ne permettre la surveillance des équipements de la liaison qu'à une station d'extrémité, une coupure intervenant dans la liaison faisant perdre les informations de fonctionnement sur les équipements situés au-delà de cette coupure par rapport à cette station d'extrémité.

Il est possible d'écarter cet inconvénient en doublant le système de télésurveillance, chaque station d'extrémité devenant alors un centre de collecte des informations de fonctionnement de tous les équipements de la liaison et chaque sens de la liaison acheminant, en plus du signal numérique de trafic, la voie de transmission numérique à très basse vitesse de l'un des systèmes de télésurveillance et la voie de télécommande de l'autre. Mais cela augmente la complexité des circuits utilisés dans chaque équipement pour la télésurveillance.

Ces systèmes de télésurveillance peuvent s'adapter, avec leurs inconvénients, à une liaison de transmission par fibres optiques. Ils se concilient cependant difficilement avec la présence des voies de service à 64 kb/s qui vient encore accroître la complexité des circuits de filtrage utilisés dans chaque équipement pour séparer à la réception le signal de trafic, les voies numériques de service d'intercommunication, la voie numérique à très basse vitesse d'un système de télésurveillance et éventuellement la voie de télécommande de l'autre système de télésurveillance.

La présente invention a pour but une télésurveillance permettant la collecte d'informations de fonctionnement dans les stations intermédiaires d'une liaison, du genre de celle obtenue par le système de télésurveillance décrit dans la demande de brevet européen EP-A-0 018 295, qui soit d'une mise en œuvre facile à l'aide de circuits auxiliaires implantés dans les stations intermédiaires de la liaison réalisables sous forme intégrée et qui permette une visualisation des états de fonctionnement de tous les équipements de la liaison dans n'importe quelle station de cette dernière.

Elle a pour objet un système d'exploitation et de maintenance d'équipements répartis le long d'une liaison de transmission numérique par câble, bidirectionnelle, ayant un système d'intercommunication entre des stations utilisant dans chaque sens de transmission un signal de voies numériques de service d'intercommunication codé selon un code redondant à configurations interdites et ajouté par une modulation au signal numérique de trafic. Ce système d'exploitation et de maintenance comporte un système de télésurveillance doublé avec, dans chaque sens de la liaison, une voie de télécommande de prise d'informations de fonctionnement dans les stations transmises par une gigue très basse fréquence imposée au rythme des signaux de voies de service d'intercommunication et une voie de transmission numérique à très basse vitesse pour la collecte des informations de fonctionnement dans les stations transmises par des viols de la loi de codage des signaux de voies de service d'intercommunication.

D'autres caractéristiques et avantages de l'invention ressortiront des revendications jointes et de la description ci-après d'un système d'exploitation et de maintenance selon l'invention équipant une liaison de transmission numérique bidirectionnelle à fibres optiques et répéteurs intermédiaires. Cette description sera faite en regard du dessin dans lequel :

la figure 1 représente, de manière schématique, une liaison de transmission numérique bidirectionnelle à fibres optiques et répéteurs intermédiaires avec son système d'exploitation et de maintenance,

la figure 2 détaille un répéteur intermédiaire avec ses circuits affectés au système d'exploitation et de maintenance,

et la figure 3 détaille les circuits affectés au système d'exploitation et de maintenance dans une station d'extrémité.

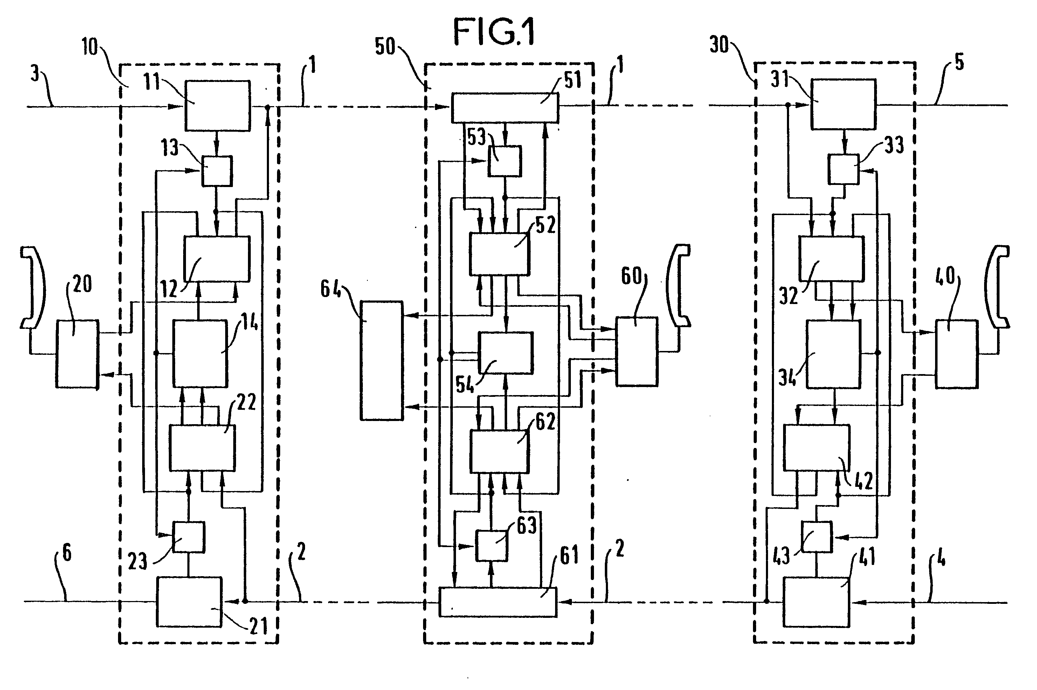

La liaison de transmission numérique représentée à la figure 1 relie dans les deux sens deux stations d'extrémité 10 et 30. Elle utilise pour ce faire une fibre optique 1, 2 par sens de transmission et des stations intermédiaires de régénération dont une seule 50 est représentée sur la figure 1.

Le signal de trafic numérique à fort débit, 140 Mb/s ou 560 Mb/s ou plus est traité de la même manière dans les deux sens de transmission. Appliqué à l'émission sous forme électrique à l'entrée 3 ou 4 de l'une des stations d'extrémité 10, 30, il est embrouillé pour lui donner des propriétés pseudo-aléatoires facilitant la récupération de son rythme, mis sous forme binaire par un codage redondant facilitant la détection des erreurs de transmission et transformé en un signal optique bivalent (allumé ou éteint) dans un circuit d'émission 11 ou 41 de la station d'extrémité considérée. Le signal optique résultant acheminé par la fibre optique 1 ou 2 parvient affaibli à une station intermédiaire de régénération 50 où il est reconverti en un signal électrique, régénéré après récupération de son rythme et remis sous forme optique dans un circuit répéteur 51, 61. Progressant d'une station intermédiaire à l'autre le signal optique parvient à la station d'extrémité de destination où il est converti en un signal électrique, régénéré après récupération de son rythme, décodé et désembrouillé dans un circuit de réception 31 ou 21 avant d'être délivré sur une sortie 5 ou 6.

La liaison de transmission numérique est équipée d'un système d'exploitation et de maintenance comportant un système d'intercommunication entre stations avec des voies numériques de service à 64 kb/s acheminées par chaque sens de la liaison et un système de télésurveillance, avec des circuits locaux 13, 53, 33, 43, 63, 23 de surveillance du fonctionnement et de l'environnement électrique et mécanique des circuits traitant le signal de trafic numérique tout au long de la liaison, et avec, sur chaque sens de la liaison, une voie de télécommande et une voie de transmission numérique à très basse vitesse permettant la synchronisation des circuits locaux de surveillance depuis l'une quelconque des stations d'extrémité et la collecte, à l'une quelconque des stations, des informations engendrées par ces circuits locaux de surveillance.

Les voies numériques de service à 64 kb/s ainsi que la voie de télécommande et la voie de transmission numérique à très basse vitesse empruntant chaque sens de la liaison se trouvent, en dehors des stations, insérées dans le signal optique acheminant le trafic numérique et sont traitées séparément du signal de trafic numérique dans les stations grâce à des circuits locaux d'insertion et/ou d'extraction 12, 52, 32, 42, 62, 22.

Pour un signal de trafic à 560 Mb/s, les voies numériques de service à 64 kb/s du système d'intercommunication peuvent être au nombre d'une dizaine par sens de la liaison, les unes utilisées pour de la phonie, téléphone ou téléconférence, et les autres pour de la signalisation et de la transmission de données entre stations. Elles sont multiplexées dans le temps pour leur acheminement sur chaque sens de la liaison. Un circuit local d'exploitation de voies de service 20, 60, 40 assure à chaque station le démultiplexage des voies de service entrantes et leur exploitation locale éventuelle, le multiplexage des voies de service sortantes ainsi que la répartition entre les voies de service entrantes et sortantes en transit. Les circuits locaux d'extraction et/ou d'insertion 12, 52, 32, 42, 62, 22 assurent le traitement, à chaque station, du signal multiplex de voies de service sortantes engendré par le circuit local d'exploitation de voies de service en vue de son insertion dans le signal optique émis dans chaque sens de la liaison et le traitement, à chaque station, du signal multiplex des voies de service entrantes extrait du signal optique reçu de chaque sens de la liaison et destiné au circuit local d'exploitation de voies de services. Lors de son insertion dans le signal optique acheminant le signal de trafic numérique sur un sens de la liaison, le signal multiplex des voies de service est codé en bipolaire et utilisé pour une modulation auxiliaire du niveau de brillance des convertisseurs électro-optiques engendrant le signal de ligne.

Les circuits locaux de surveillance 13, 53, 33, 43, 63, 23 sont des circuits classiques qui surveillent par exemple les taux d'erreurs des circuits régénérant le signal de trafic numérique, leur tension d'alimentation, le vieillissement des sources optiques des convertisseurs électro-optiques ainsi que l'état du matériel auxiliaire lié à sa mise en œuvre : batterie d'accumulateurs, secteur, capteur de pression, etc.

Les voies de télécommande et de transmission numérique à très basse vitesse sont acheminées sur chaque sens l'une par l'intermédiaire d'une gigue à très basse fréquence imposée au rythme du signal multiplex de voies de service lors de son codage binaire-bipolaire et l'autre par violation de la règle de bipolarité du signal résultant. Dans certains cas, notamment avec des liaisons comportant plusieurs fibres par sens, les voies de service acheminées par certaines fibres sont inutilisées, leur signal étant remplacé par un signal numérique permettant les viols de la loi de bipolarité, par exemple un signal bipolaire tout un.

Les circuits locaux d'extraction et d'insertion 52, 62 des stations intermédiaires 50 cadencent le signal multiplex de voies de service émis sur un sens de la liaison à l'aide du rythme récupéré du signal multiplex de voies de service reçu sur le même sens de la liasion et sont transparents à la gigue très basse fréquence.

La gigue de rythme est introduite au départ des deux sens de la liaison par des circuits d'exploitation de la télésurveillance 14 et 34 qui sont placés chacun dans une station d'extrémité 10, 30 et qui délivrent chacun au circuit local d'insertion 12, 42 un signal d'horloge destiné à cadencer le signal multiplex de voies de service sortantes selon un rythme n. 64 kHz (n étant le nombre de voies de service par sens de la liaison) et affecté périodiquement de bouffées d'une gigue à très basse fréquence pae exemple 125 Hz constituant les signaux de télécommande.

Les bouffées de gigue une fois introduites sur un sens de la liaison se propagent de manière quasi-instantanée sans affaiblissement au travers des circuits locaux d'extraction et/ou d'insertion 52, 62, 32 car les raies de fréquence résultante sont, en raison de la très basse fréquence de la gigue, largement dans la bande passante des filtres assurant les récupérations de rythme. Elles peuvent être en outre facilement détectées au niveau de ces filtres.

Chaque bouffée de gigue constitue un signal de télécommande destiné à synchroniser les circuits locaux de surveillance et à valider leurs informations pour leur acheminement vers les stations d'extrémité par les deux voies de transmission numérique à très basse vitesse.

Les émissions des bouffées de gigue par les circuits d'exploitation de la télésurveillance 14 et 34 des deux stations d'extrémité sont synchronisées entre elles, un circuit d'exploitation de la télésurveillance 14, 34 détectant la gigue affectant le rythme du signal multiplexé des voies de service entrantes reçu du circuit local d'extraction 22, 32 et émettant une bouffée de gigue soit après écoulement d'un délai de quelques secondes soit en réponse à la détection d'une bouffée de gigue engendrée par l'autre circuit d'exploitation de télésurveillance, ce qui assure le recalage des bouffées de gigue émises sur les deux voies de télécommande. Dans les stations d'extrémité, elles s'accompagnent d'un ordre de télécommande particulier à destination des circuits locaux de surveillance 13, 23, 43, 33 qui est également engendré par le circuit d'exploitation de la télésurveillance 14, 34. Dans les stations intermédiaires 50 les bouffées de gigue sont détectées séparément pour les deux sens de la liaison par un circuit de synchronisation 54 qui engendre un signal de synchronisation à l'adresse des circuits locaux de surveillance 53, 63 à partir des bouffées de gigue lui parvenant de l'un des sens de liaison, le sens choisi étant celui sur lequel la détection des bouffées de gigue est intervenue en premier.

Les circuits locaux d'insertion 12, 42 des stations d'extrémité 10, 30 qui assurent le traitement du signal multiplex des voies de service sortantes en vue de son insertion dans le signal optique émis engendrent également, sous les ordres des circuits locaux de surveillance 13, 23, 33, 43, des viols de la loi de bipolarité du codage du signal multiplex des voies de service sortantes, viols qui permettent l'insertion des informations de surveillance du fonctionnement des stations d'extrémité au départ des deux voies de transmission numérique à très basse vitesse du système de télésurveillance. Les circuits locaux d'extraction et d'insertion 52, 62 des stations intermédiaires 50 assurent le relayage de ces deux voies de transmission à très basse vitesse. Ils détectent les viols de la loi de bipolarité du codage des signaux multiplex des voies de service entrantes donnant ainsi un accès de réception local aux deux voies de transmission numérique à très basse vitesse et engendrent, en réponse à ces viols détectés et à des ordres des circuits locaux de surveillance 53, 63, des viols de la loi de bipolarité de codage des signaux multiplex des voies de service sortantes. Le circuit local d'extraction 22, 32 de chaque station d'extrémité détecte les viols de la loi de bipolarité du codage du signal multiplex de voies de service entrantes et délivre au circuit d'exploitation de la télésurveillance 14, 34 les informations acheminées par les deux voies de transmission numérique à très basse vitesse du système de télésurveillance.

Les informations sur le fonctionnement et l'environnement électrique et mécanique des circuits traitant le signal de trafic numérique tout au long de la liaison sont toutes disponibles dans le circuit d'exploitation de télésurveillance 14, 34 de chacune des stations d'extrémité où elles sont analysées et exploitées de manière indépendante. Elles sont également entièrement accessibles aux stations intermédiaires par les accès locaux de réception des deux voies de transmission numérique à très basse vitesse permettant le branchement éventuel d'un circuit d'exploitation de télésurveillance 64 tirant les informations de fonctionnement en partie de l'une des voies de transmission numérique à très basse vitesse et en partie de l'autre.

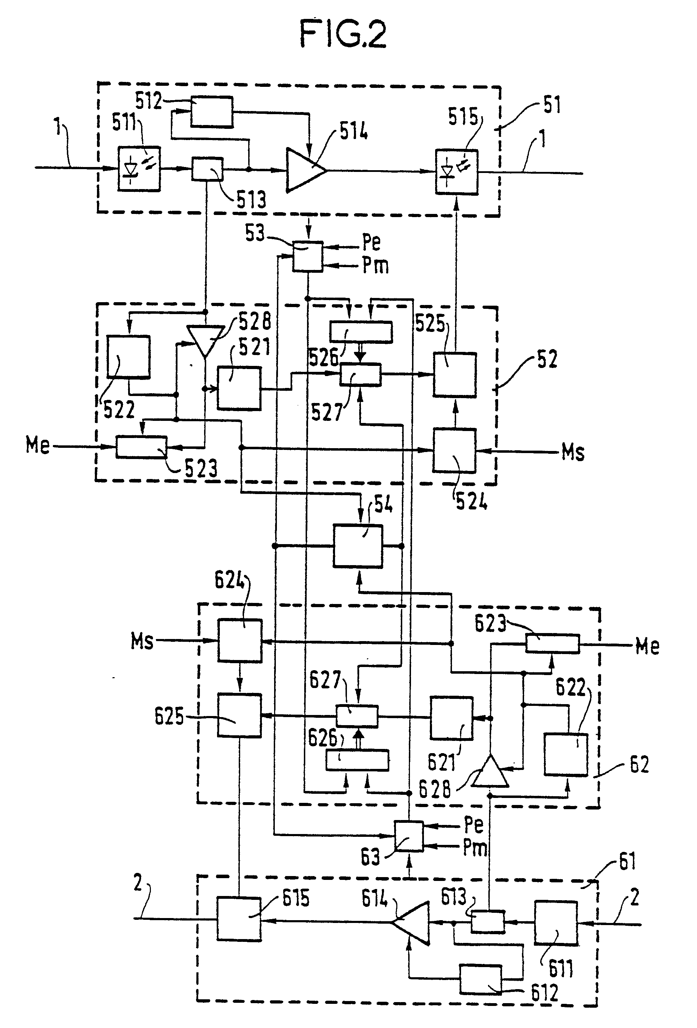

La figure 2 détaille une station intermédiaire 50. On distingue sur cette figure les éléments principaux des deux répéteurs unidirectionnels 51 et 61 intercalés l'un dans la fibre optique 1, l'autre dans la fibre optique 2 avec un convertisseur opto-électrique 511, 611 placé en entrée et suivi d'un filtre d'aiguillage 513, 613, d'un circuit régénérateur 514, 614 du signal de trafic numérique cadencé par un circuit de récupération du rythme 512, 612 également relié à la sortie du filtre d'aiguillage et d'un convertisseur électro-optique 515, 615 placé en sortie.

Le signal multiplexé de voies de service occupe une bande de fréquence placée en dessous de la limite inférieure de celle du signal de trafic numérique. Sa séparation s'effectue dans le filtre d'aiguillage par un filtrage passe-bas alors que celle du signal de trafic numérique se fait par filtrage passe-haut. Sa réunion au signal de trafic numérique s'effectue par une modulation auxiliaire du niveau de puissance ou de brillance de l'état allumé de la source lumineuse du convertisseur électro-optique 515, 615 qui est par ailleurs régulée en puissance moyenne et modulée en tout ou rien par le signal de trafic numérique issu du circuit régénérateur 514, 614.

Le signal multiplexé de voies de service entrantes délivré par le filtre d'aiguillage 513, 613 est appliqué dans le circuit local d'extraction et d'insertion 52, 62 à un circuit régénérateur 528, 628 cadencé par un circuit d'horloge 522, 622 qui récupère le rythme de codage du signal multiplex de voies de service entrantes. Le signal issu du circuit régénérateur 528, 628 parvient d'une part à un détecteur de viols 521, 621 qui constitue un accès réception à la voie de transmission numérique très basse et d'autre part à un circuit de décodage bipolaire-binaire 523, 623 piloté par le circuit d'horloge 522, 622 et qui délivre sous forme binaire le signal multiplex de voies de service entrantes Me à destination éventuelle du circuit local d'exploitation de voies de service non représenté dans cette figure 2.

Le signal multiplex de voies de service sortantes Ms délivré par le circuit local d'exploitation de voies de service est appliqué dans le circuit local d'extraction et d'insertion 52, 62 à un codeur binaire-bipolaire 524, 624 cadencé par le rythme du signal multiplex de voies entrantes parvenu par le même sens de transmission, rythme qui est récupéré avec sa gigue à sa très basse fréquence par le circuit d'horloge 522, 622, puis appliqué à un générateur de viols de la règle de bipolarité 525, 625 avant d'être utilisé pour la modulation auxiliaire du convertisseur électro-optique 515, 615.

Les circuits d'horloge 522 et 622 des circuits d'extraction et d'insertion 52 et 62 équipant les deux sens de transmission de la station intermédiaire sont constitués de circuits accordés. Le circuit de synchronisation 54 reçoit des deux circuits d'horloge 522 et 622 les rythmes récupérés et en extrait les gigues respectives grâce à des boucles à verrouillage de phase. Il engendre un signal de synchronisation à l'adresse des circuits locaux de surveillance 53, 63 dès qu'il reconnaît un signal de télécommande dans l'un des signaux de gigue. Sous l'action de ce signal de télécommande, les circuits locaux de surveillance 53, 63 qui reçoivent des informations de fonctionnement des circuits générateurs 514, 614 mais également des informations Pe et Pm sur leur environnement électrique et mécanique figent les résultats de leur mesure, les placent dans un registre tampon 526, 626 de chacun des deux circuits locaux d'extraction et d'insertion 52, 62 puis initialisent un nouveau cycle de mesure.

Les sorties des détecteurs de viols 521, 621 des circuits locaux d'insertion et d'extraction 52, 62 forment des accès réception aux voies de transmission numérique basse vitesse du système de télésurveillance. Elles sont reliées par l'intermédiaire d'un multiplexeur 527, 627 au générateur de viols 525, 625. Le multiplexeur 527, 627 est également relié en entrée au registre tampon 526, 626 et est commandé par le circuit de synchronisation 54. Il réalise le multiplexage temporel dans la voie de transmission numérique à très basse vitesse, d'informations de fonctionnement en transit, en provenance d'autres stations et des informations de fonctionnement stockées dans le registre tampon 526, 626. Sa structure dépend de la nature synchrone ou asynchrone de la voie de transmission numérique à très basse vitesse. Si la voie est tramée avec un mot de verrouillage trame engendré à la station d'extrémité à l'origine de la voie considérée et complété par les informations relatives au fonctionnement des stations au fur et à mesure de son passage dans ces dernières, il peut être formé d'un circuit décodeur de mots de verrouillage trame suivi d'un circuit de détection de fin de trame et de complémentation selon une structure proche de celle décrite dans le brevet français n° 2 276 744 déposé par la demanderesse. Si la voie est synchrone, il peut être formé essentiellement d'un registre à décalage mis en chaîne avec ceux des autres stations grâce à la modulation par l'intermédiaire des viols de la loi de bipolarité des signaux multiplex des voies de service empruntant un même sens de la liaison et décalé en synchronisme avec ceux des autres stations.

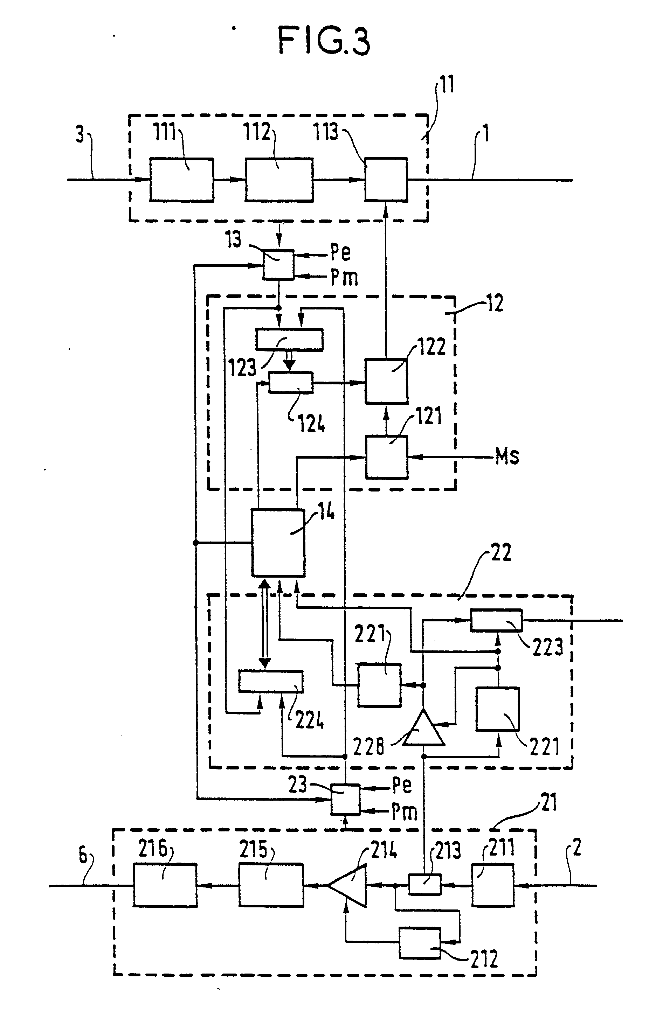

La figure 3 détaille une station d'extrémité 10. On distingue sur cette figure les principaux éléments d'un circuit d'émission 11 et d'un circuit de réception 21 du signal de trafic numérique. Le circuit d'émission 11 comporte essentiellement un embrouilleur 111 donnant des proipriétés pseudo-aléatoires au signal de trafic numérique à émettre, un codeur 112 mettant le signal de trafic sous une forme binaire redondante facilitant la détection des erreurs et un convertisseur électro-optique 113 analogue à ceux 515, 615 des stations intermédiaires.

Le signal multiplex des voies de service sortantes Ms délivré par le circuit local d'exploitation de voies de service non représenté dans cette figure est appliqué dans le circuit local d'insertion 12 à un codeur binaire-bipolaire 121 puis à un générateur de viols de la règle de bipolarité 122 avant d'être extrait du circuit local d'insertion 12 et utilisé pour la modulation auxiliaire du convertisseur électro-optique 113.

Le rythme du codeur binaire-bipolaire 121 est engendré dans le circuit local d'exploitation de la télésurveillance 14 par un oscillateur contrôlé en tension soumis par instants à une modulation de phase à très basse fréquence engendrant des bouffées de gigue. Simultanément avec chaque bouffée de gigue, le circuit local d'exploitation de télésurveillance 14 engendre un signal auxiliaire de synchronisation à l'adresse des circuits locaux de surveillance 13, 23. Sous l'action de ce signal auxiliaire de synchronisation, les circuits de surveillance 13, 23 qui reçoivent des informations de fonctionnement du circuit d'émission 11 et du circuit de réception 12 ainsi que des informations Pm, Pe sur l'environnement mécanique et électrique de la station d'extrémité, arrêtent les résultats de leur mesure, les placent dans un registre tampon 123 du circuit local d'insertion 12 relié par l'intermédiaire d'un circuit d'accès 124 au générateur de viols 122 et entament un nouveau cycle de mesure.

La structure du circuit d'accès 124 dépend, comme celle des multiplexeurs 527, 627 des stations intermédiaires, de la nature de la voie de transmission numérique à très basse vitesse du système de télésurveillance. Dans l'hypothèse d'une voie tramée avec un mot de verrouillage trame complété à chaque station par les informations collectées localement, ce circuit d'accès est constitué par un générateur de mots de verrouillage trame déclenché par le circuit local d'exploitation de télésurveillance 14 simultanément avec l'émission d'une bouffée de gigue. Dans le cas d'une voie synchrone, ce peut être un simple registre à décalage mis en chaîne avec ceux constituant les multiplexeurs des autres stations grâce à la modulation par l'intermédiaire des viols de bipolarité et décalé en synchronisme avec eux.

Le circuit de réception 21 commence par un répéteur unidirectionnel avec, comme éléments essentiels, un convertisseur opto-électrique 211 placé en entrée et suivi d'un filtre d'aiguillage 213 et d'un circuit régénérateur 214 cadencé par un circuit de récupération de rythme 212 également relié à la sortie du filtre d'aiguillage. Il se poursuit par un décodeur 215 et un désembrouilleur 216 adaptés au codeur 112 et à l'embrouilleur 111 d'émission.

Le signal multiplexé des voies de service entrantes délivré par le filtre d'aiguillage 213 est appliqué dans le circuit local d'extraction 22 à un circuit de régénération 228 cadencé par un circuit d'horloge 222 qui récupère le rythme de codage du signal multiplex des voies de service entrantes. Le signal issu du circuit régénérateur 228 est appliqué d'une part à un détecteur de viols 221 qui constitue la sortie de destination de la voie de transmission numérique à très basse vitesse du système de télésurveillance, et d'autre part à un circuit de décodage bipolaire-binaire 223 piloté par le circuit d'horloge 222 et qui délivre sous forme binaire le signal multiplexé de voies de service entrantes Me à destination du circuit local d'exploitation de voies de service non représenté dans cette figure 3.

Le circuit d'horloge 222 délivre au circuit local d'exploitation de la télésurveillance 14 le rythme de codage du signal multiplex de voies de service entrantes affecté de la gigue et permet à ce dernier circuit une éventuelle synchronisation des bouffées de gigue qu'il engendre sur celles délivrées par le circuit local d'exploitation de la télésurveillance de l'autre station d'extrémité.

Le signal de sortie du détecteur de viols 221 du circuit local d'extraction 22 est appliqué au circuit local d'exploitation de la télésurveillance 14 qui reçoit par son intermédiaire les informations de fonctionnement engendrées par les circuits locaux de surveillance de toutes les autres stations de la liaison. Un registre tampon 224 également placé dans le circuit local d'extraction 22 reçoit les informations de fonctionnement engendrées par les circuits locaux de surveillance 13 et 23 de la station d'extrémité elle-même et les transfère au circuit local d'exploitation 14 sur requête de ce dernier.

Le système d'exploitation et de maintenance d'une liaison numérique que l'on vient de décrire présente l'intérêt de ne spécialiser ni les stations d'extrémité ni les stations intermédiaires ce qui lui donne de grandes facilités d'adaptation aux diverses configurations possibles : maintenance et exploitation de la liaison entière depuis une station d'extrémité, une station intermédiaire ou un centre relié par télétransmission à une station d'extrémité ou intermédiaire, ou maintenance et exploitation de la liaison par tronçons indépendants depuis des stations intermédiaires ou des centres reliés à elles par télétransmission.

**Revendications**

1. Système d'exploitation et de maintenance d'équipements répartis le long d'une liaison de transmission numérique par câble, bidirectionnelle, ayant un système d'intercommunication entre des stations où sont localisés des équipements utilisant dans chaque sens de transmission un signal de voies numériques de service d'intercommunication codé selon un code redondant à configuration interdite et ajouté par une modulation au signal numérique de trafic, ledit système d'exploitation et de maintenance comportant un système de télésurveillance avec une voie de télécommande de prise d'informations de fonctionnement dans les stations empruntant un sens de la liaison et une voie de transmission numérique à très basse vitesse pour la collecte des informations de fonctionnement empruntant l'autre sens de la liaison, caractérisé en ce que le système de télésurveillance est doublé avec, dans chaque sens de la liaison, une voie de télécommande transmise par une gigue très basse fréquence imposée au rythme des signaux de voies de service d'intercommunication et une voie de transmission numérique à très basse vitesse transmise par des viols de la loi de codage des signaux de voies de service d'intercommunication.

2. Système selon la revendication 1 dans lequel les voies de télécommande acheminent périodiquement des bouffées de gigue synchronisant des circuits locaux de surveillance montés dans les équipements répartis le long de la liaison, caractérisé en ce que lesdites voies de télécommande sont synchronisées l'une par l'autre, une bouffée de gigue reçue à une extrémité de la liaison sur une voie de télécommande provoquant le recalage de l'émission des bouffées de gigue sur l'autre voie de télécommande.

3. Système selon la revendication 2, caractérisé en ce que les circuits locaux de surveillance sont synchronisés indifféremment par l'une ou l'autre des voies de télécommande.

4. Système selon la revendication 3, caractérisé en ce que les circuits locaux de surveillance sont synchronisés par la voie de télécommande sur laquelle les bouffées de gigue apparaissent en premier.

## Claims

1. An operation and maintenance system for equipments distributed along a bidirectional digital transmission link using a cable and having an intercommunication system between stations in which equipments are located, this system using in both transmission directions an intercommunication signal of digital service channels coded according to a redundant code with prohibited configuration and added through a modulation to the digital traffic signal, said operation and maintenance system comprisong a telemonitoring system with a remote control channel using one direction of the link for the acquisition of operative informations in the stations, and a digital transmission channel of very low speed using the other direction of the link for collecting the operative informations, characterized in that the telemonitoring system is provided twice, one remote control channel in each direction of the link being transmitted by a very low frequency gigue which is superimposed to the rhythm of the intercommunication signals of service channels, and a digital transmission channel of very low frequency being transmitted by breaches of the code law of the intercommunication signals of service channels.

2. A system according to claim 1, in which the remote control channels transfer periodically gigue pulses which synchronize local monitoring circuits mounted in the equipments which are distributed along the link, characterized in that said remote control channels are synchronized one by the other, a gigue pulse received at one end of the link on a remote control channel causing the readjustment of the emission of gigue pulses on the other remote channel.

3. A system according to claim 2, characterized in that the local monitoring circuits are synchronized indifferently by one or the other remote control channel.

4. A system according to claim 3, characterized in that the local monitoring circuits are synchronized by the remote control channel on which the pulses appear first.

## Patentansprüche

1. Betriebs- und Wartungssystem für entlang einer kabelgebundenen digitalen und bidirektionalen Übertragungsstrecke verteilte Geräte, mit einem Nachrichtenaustauschsystem zwischen Stationen, an denen sich Geräte befinden, wobei dieses System in jeder Übertragungsrichtung ein Nachrichtenaustauschsignal digitaler Dienstkanäle verwendet, das gemäß einem redundanten Kode mit verbotener Konfiguration kodiert und mittels einer Modulation dem digitalen Verkehrssignal zugefügt ist, wobei das Betriebs- und Wartungssystem ein Fernüberwachungssystem mit einem eine Richtung der Übertragungsstrecke durchlaufenden Fernsteuerkanal zur Aufnahme von Betriebsinformationen in den Stationen und einen digitalen Übertragungskanal sehr niedriger Geschwindigkeit für die Sammlung der Betriebsinformationen in der anderen Übertragungsrichtung aufweist, dadurch gekennzeichnet, daß das Fernüberwachungssystem doppelt vorliegt und in jeder Übertragungsrichtung einen Fernsteuerungskanal, der mit einer sehr niederfrequenten Gigue übertragen wird, die dem Rhythmus der Nachrichtenaustauschsignale von Dienstkanälen aufgeprägt ist, und einen digitalen Übertragungskanal sehr niedriger Geschwindigkeit aufweist, der durch Verletzungen des Kodegesetzes des Nachrichtenaustauschsignale von Dienstkanälen übertragen wird.

2. System nach Anspruch 1, in dem die Fernsteuerkanäle periodisch Giguenstöße übertragen, die die örtlichen Überwachungskreise in den entlang der Strecke verteilten Geräten synchronisieren, dadurch gekennzeichnet, daß jeder Fernsteuerkanal durch einen anderen synchronisiert wird und ein Giguenstoß, der an einem Ende der Strecke in einem Fernsteuerkanal empfangen wird, die Nachstellung der Aussendung der Giguenstöße auf dem anderen Fernsteuerkanal bewirkt.

3. System nach Anspruch 2, dadurch gekennzeichnet, daß die örtlichen Überwachungskreise indifferent von dem einen oder anderen Fernsteuerkanal synchronisiert werden.

4. System nach Anspruch 3, dadurch gekennzeichnet, daß die örtlichen Überwachungskreise von dem Fernsteuerkanal synchronisiert werden, auf dem die Giguenstöße zuerst auftreten.

FIG1

FIG.2

0 108 668

2

FIG.3

0 108 668